# EUROPEAN PATENT APPLICATION

(11) **EP 4 701 093 A1**
(43) Date of publication of application: **25.02.2026**
(21) Application number: 25197102.4
(22) Date of filing: 20.08.2025
(51) Int. Cl.: H04B 7/06, H04W 4/70

(54) **DETERMINATION OF ANTENNAS FOR A-IOT COMMUNICATION**

(30) Priority: 20.08.2024 GB 202412239
(71) Applicant: Nokia Technologies Oy, 02610 Espoo (FI)
(72) Inventor: SVENDSEN, Simon, 9220 Aalborg (DK); HARREBEK, Johannes, 9000 Aalborg (DK); KIILERICH PRATAS, Nuno Manuel, 9220 Aalborg (DK); BARBU, Oana-Elena, 9220 Aalborg (DK); VEJLGAARD, Benny, 9260 Gistrup (DK)
(74) Representative: Script Intellectual Property LLP

(57) **Abstract**

Example embodiments of the present disclosure relate to a terminal device, a method, an apparatus and a computer readable storage medium for determination of antennas for an A-IoT communication. In the solution, a terminal device may determine whether a communication link with a network device is capable of switching from a first antenna to a different antenna, and further determine a set of antennas available for a communication with a power-limited device based on a determination result for the communication link with the network device. Specifically, the terminal device may determine whether the first antenna which is used for a communication link with a network device can be included into the set of antennas available for a communication with a power-limited device. As a result, a communication with the network device and a communication with the power-limited device can be concurrently performed by the terminal device.

## Description

### FIELD

Example embodiments of the present disclosure generally relate to the field of telecommunication and in particular, to a terminal device, a method, an apparatus and a computer readable storage medium for a determination of antennas for ambient internet of things (A-IoT) communication.

### BACKGROUND

Ambient internet of things (ambient-IoT or A-IoT) is currently discussed in the third generation partnership project (3GPP) Release 19 (Rel-19 or R19). An A-IoT device can be activated and configured by an activator via an activation signal, which is also named as a reader-to-device (R2D) signal. An A-IoT device may provide a device-to-reader (D2R) response signal, which may be modulated onto a carrier wave that is provided by a carrier wave node. A resource, such as an antenna, used for the transmission of the R2D signal or the carrier wave should be studied.

### SUMMARY

In general, example embodiments of the present disclosure provide a solution for a determination of antennas for A-IoT communication.

In a first aspect, there is provided a terminal device. The terminal device comprises: at least one processor; and at least one memory storing instructions, wherein the instructions when executed by the at least one processor, cause the terminal device at least to: determine whether a communication link with a network device using a first antenna is capable of switching to a different antenna; and based on determining that the communication link is not capable of switching from the first antenna to a different antenna, determine that a set of antennas available for a communication with a power-limited device comprises at least one antenna that is not used by the communication with the network device; or based on determining that the communication link is capable of switching from the first antenna to a different antenna, determine that the set of antennas available for the communication with the power-limited device comprises the first antenna and the at least one antenna, wherein the terminal device is equipped with a plurality of antennas, and at least the first antenna in the plurality of antennas is used for the communication with the network device.

In a second aspect, there is provided a method. The method comprises: determining, at a terminal device, whether a communication link with a network device using a first antenna is capable of switching to a different antenna; and based on determining that the communication link is not capable of switching from the first antenna to a different antenna, determining that a set of antennas available for a communication with a power-limited device comprises at least one antenna that is not used by the communication with the network device; or based on determining that the communication link is capable of switching from the first antenna to a different antenna, determining that the set of antennas available for the communication with the power-limited device comprises the first antenna and the at least one antenna, wherein the terminal device is equipped with a plurality of antennas, and at least the first antenna in the plurality of antennas is used for the communication with the network device.

In a third aspect, there is provided an apparatus. The apparatus comprises: means for determining whether a communication link with a network device using a first antenna is capable of switching to a different antenna; and means for, based on determining that the communication link is not capable of switching from the first antenna to a different antenna, determining that a set of antennas available for a communication with a power-limited device comprises at least one antenna that is not used by the communication with the network device; or means for, based on determining that the communication link is capable of switching from the first antenna to a different antenna, determining that the set of antennas available for the communication with the power-limited device comprises the first antenna and the at least one antenna, wherein the apparatus is equipped with a plurality of antennas, and at least the first antenna in the plurality of antennas is used for the communication with the network device.

In a fourth aspect, there is an apparatus. The apparatus comprises: determining circuitry configured to determine whether a communication link with a network device using a first antenna is capable of switching to a different antenna; and determining circuitry configured to based on determining that the communication link is not capable of switching from the first antenna to a different antenna, determine that a set of antennas available for a communication with a power-limited device comprises at least one antenna that is not used by the communication with the network device; or determining circuitry configured to based on determining that the communication link is capable of switching from the first antenna to a different antenna, determine that the set of antennas available for the communication with the power-limited device comprises the first antenna and the at least one antenna, wherein the terminal device is equipped with a plurality of antennas, and at least the first antenna in the plurality of antennas is used for the communication with the network device.

In a fifth aspect, there is provided a non-transitory computer readable medium comprising program instructions for causing an apparatus to perform at least the method in a second aspect.

In a sixth aspect, there is provided a computer program comprising instructions, which, when executed by an apparatus, cause the apparatus at least the method in a second aspect.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1A illustrates examples of some cases for topology 1;
FIG. 1B illustrates examples of some cases for topology 2;
FIG. 1C illustrates an example of a network environment in which some example embodiments of the present disclosure may be implemented;
FIG. 2 illustrates an example of a process flow in accordance with some example embodiments of the present disclosure;
FIGS. 3A-3B illustrate some examples of antenna determination at the terminal device in accordance with some example embodiments of the present disclosure;
FIGS. 4A-4B illustrate some examples of a process flow at the terminal device in accordance with some example embodiments of the present disclosure;
FIG. 5 illustrates a flowchart of a method implemented at a terminal device in accordance with some example embodiments of the present disclosure;
FIG. 6 illustrates a simplified block diagram of a device that is suitable for implementing some example embodiments of the present disclosure; and
FIG. 7 illustrates a block diagram of an example of a computer readable medium in accordance with some example embodiments of the present disclosure.

Throughout the drawings, the same or similar reference numerals represent the same or similar elements.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog
   and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), New Radio (NR), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a new radio (NR) NB (also referred to as a gNB), a Remote Radio Unit (RRU), a radio header (RH), a remote radio head (RRH), an integrated access and backhaul (IAB) node, a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a machine type communication (MTC) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

Ambient IoT devices are characterized according to their energy storage capacity, and capability of generating radio frequency (RF) signals for their transmissions. An ambient device (also called as a device in the present disclosure) may have either no energy storage at all, or may have limited energy storage.

Relying on these storage capacities, the following set of Ambient IoT devices may be considered:
- Device A: No energy storage, no independent signal generation/amplification, i.e. backscattering transmission.
- Device B: Has energy storage, no independent signal generation, i.e. backscattering transmission. Use of stored energy can include amplification for reflected signals.
- Device C: Has energy storage, has independent signal generation, i.e., active RF components for transmission.

A limited energy storage can be different among implementations within Device B or implementations within Device C, and different between Device B and Device C. Such storage is expected to be order(s) of magnitude smaller than an NB-IoT device would typically include. Device A, B, and C are able to demodulate control, data, etc. from the relevant entity in radio access network (RAN) according to connectivity topology.

In the present disclosure, an activator may refer to an apparatus that transmits an activation signal to an A-IoT device, for example, the activation signal may be a R2D signal. In the present disclosure, a CW node may refer to an apparatus that transmits carrier wave (may be called as a CW signal) to an A-IoT device for energy harvesting at the A-IoT device. In the present disclosure, a reader may refer to an apparatus that receives a signal from an A-IoT device, for example, the signal may be a response to the activation signal, and the response may be a D2R signal. In some examples, the activator and the reader may be implemented as a same apparatus or different apparatuses. In some examples, the activator and the CW node may be implemented as a same apparatus or different apparatuses. In some examples, the CW node and the reader may be implemented as a same apparatus or different apparatuses. In some examples, the activator and the CW node may be implemented as a same terminal device or different terminal devices. In some examples, the reader, the activator, and the CW node may be implemented as/in a same apparatus, such as a same UE.

It should be noted that the term "A-IoT device" is used for describing some embodiments of the present disclosure, however, the present disclosure does not limit for this aspect. In some embodiments, the A-IoT device may be replaced by a power-limited device, a non-RRC connected device, an IoT device, a device with a non-RRC connected application, etc.

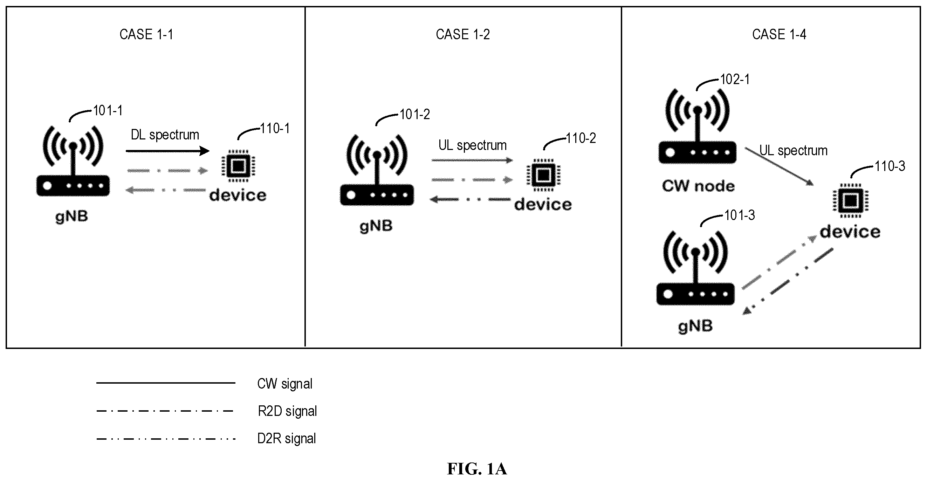

FIG. 1A illustrates examples of some cases for topology 1. In topology 1, the ambient device is connected to a gNB. In case 1-1, the gNB 101-1 may transmit a R2D signal to an A-IoT device 110-1 and the A-IoT device 110-1 may transmit a D2R signal to the gNB 101-1. In addition, the g-NB 101-1 may provide a carrier wave which may be in a downlink spectrum. In case 1-2, the gNB 101-2 may transmit a R2D signal to an A-IoT device 110-2 and the A-IoT device 110-2 may transmit a D2R signal to the gNB 101-2. In addition, the g-NB 101-2 may provide a carrier wave which may be in an uplink spectrum. In case 1-4, the gNB 101-3 may transmit a R2D signal to an A-IoT device 110-3 and the A-IoT device 110-3 may transmit a D2R signal to the gNB 101-3. In addition, a CW node 102-1 may provide a carrier wave to the A-IoT device 110-3.

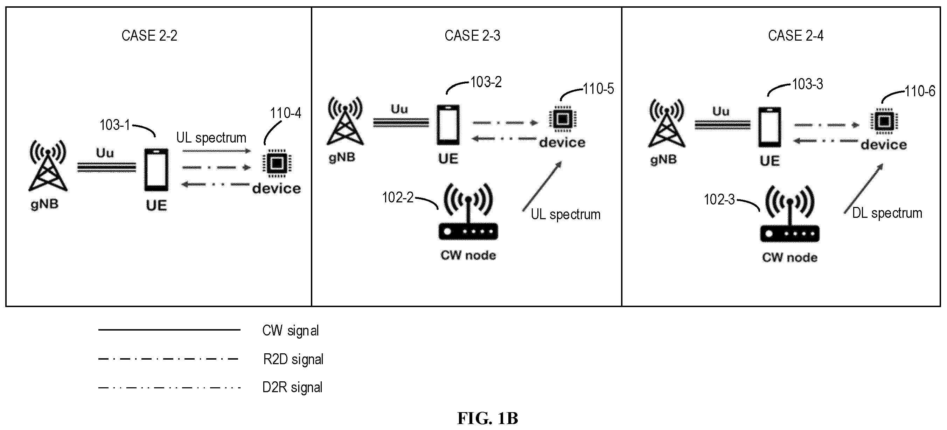

FIG. 1B illustrates examples of some cases for topology 2. In topology 2, the ambient device is connected to a gNB via a UE. In case 2-2, the UE 103-1 may transmit a R2D signal to an A-IoT device 110-4 and the A-IoT device 110-4 may transmit a D2R signal to the UE 103-1. In addition, the UE 103-1 may provide a carrier wave which may be in an uplink spectrum. In case 2-3, the UE 103-2 may transmit a R2D signal to an A-IoT device 110-5 and the A-IoT device 110-5 may transmit a D2R signal to the UE 103-2. In addition, a CW node 102-2 may provide a carrier wave which may be in an uplink spectrum. In case 2-4, the UE 103-3 may transmit a R2D signal to an A-IoT device 110-6 and the A-IoT device 110-6 may transmit a D2R signal to the UE 103-3. In addition, a CW node 102-3 may provide a carrier wave which may be in a downlink spectrum.

As illustrated, the CW signal and/or the activation signal may be transmitted from a gNB or from another device that is controlled/served by the gNB (such as a terminal device). In some examples, a terminal device may transmit the CW signal and/or the activation signal to an A-IoT device. The terminal device may be operating in dynamic environments due to changing locations, orientations, and/or affected by a user, and the terminal device may be equipped with multiple antennas.

Appropriate antenna(s) should be selected for an A-IoT session, e.g., for transmitting a CW signal and/or an activation signal, by the terminal device. However, allocating the antenna(s) blindly for the A-IoT session may result in a decreased performance for a RRC connection or the A-IoT session, since the allocation for both systems may be overlapped in time. For example, a terminal device is transmitting an RRC UL signal to a network device and is further required to transmit a CW signal, in some cases, the active time span for a CW signal (e.g., especially if also used for A-IoT device energy harvesting) may be expected to be long compared to the frame rate of a communication signal with a network device, and the terminal device cannot necessarily quickly switch between an RRC UL signal and an A-IoT CW transmission. Therefore, how to enable the terminal device to perform concurrent transmissions should be addressed.

Example embodiments of the present disclosure provide a solution for determination of antennas for an A-IoT communication. In the solution, a terminal device may determine whether a communication link with a network device is capable of switching from a first antenna to a different antenna, and further determine a set of antennas available for a communication with a power-limited device based on a determination result for the communication link with the network device. Specifically, the terminal device may determine whether the first antenna which is used for a communication link with a network device can be included into the set of antennas available for a communication with a power-limited device. As a result, a communication with the network device and a communication with the power-limited device can be concurrently performed by the terminal device. Principles and some example embodiments of the present disclosure will be described in detail below with reference to the accompanying drawings.

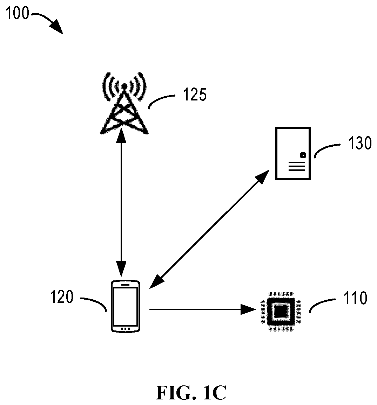

FIG. 1C illustrates an example of a network environment 100 in which some example embodiments of the present disclosure may be implemented. The environment 100, which may be a part of a communication network, comprises a power-limited device 110 and a terminal device 120.

The terminal device 120 is equipped with multiple antennas. Each of the multiple antennas may connect to a power amplifier (PA), and each of the multiple antennas may also connect to a receiver chain. Different antennas may connect to a same PA or to different PAs respectively, e.g., depending on the implementation of the terminal device 120.

There is a communication link between the terminal device 120 and a network device 125. In some examples, the communication link may be regarded as an RRC connection, and a communication between the terminal device 120 and the network device 125 may be a RRC uplink/downlink communication. For example, the network device 125 may be a serving gNB of the terminal device 120.

The power-limited device 110 may be implemented as an A-IoT device, such as one of A-IoT devices 110-1 to 110-6 in FIGS. 1A-1B.

The terminal device 120 may be an activator, a reader, and/or a CW node for the power-limited device 110. The terminal device 120 may transmit a CW signal and/or an activation signal to the power-limited device 110. For example, the terminal device 120 may be implemented as one of the CW nodes 102-1 to 102-3 or the terminal devices 103-1 to 103-3.

For ease of description, a connection between the terminal device 120 and the network device 125 may be regarded as an RRC connection, while a connection between the terminal device 120 and the power-limited device 110 may be regarded as a non-RRC connection. The present disclosure may enable the terminal device 120 to have concurrent connections, e.g., including an RRC connection and a non-RRC connection.

In some examples, the terminal device 120 may be operating within a 3GPP licensed band. In some examples, the terminal device 120 may be configured to be a CW node or an activator, while being RRC connected to the network device 125.

The communication environment 100 also includes a session control unit (SCU) 130, which may be configured to control a session of the power-limited device 110, e.g., an A-IoT session. In some examples, the SCU 130 may be a function or an entity in core network. In some examples, the terminal device 120 may communicate with the SCU 130, e.g., directly or via one or more other entities.

The communication environment 100 may comprise any suitable number of devices and cells. In the communication environment 100, the network device 125 can provide services to the terminal device 120, and the network device 125 and the terminal device 120 may communicate data and control information with each other. In some embodiments, the network device 125 and the terminal device 120 may communicate with direct links/channels.

In the environment 100, a link from the network device 125 to the terminal device 120 is referred to as a downlink (DL), while a link from the terminal device 120 to the network device 125 is referred to as an uplink (UL). In downlink, the network device 125 is a transmitting (TX) device (or a transmitter) and the terminal device 120 is a receiving (RX) device (or a receiver). In uplink, the terminal device 120 is a transmitting TX device (or a transmitter) and the network device 125 is a RX device (or a receiver). It is to be understood that the network device 125 may provide one or more serving cells. In some embodiments, the network device 125 can provide multiple cells.

Communications in the network environment 100 may be implemented according to any proper communication protocol(s), comprising, but not limited to, cellular communication protocols of the first generation (1G), the second generation (2G), the third generation (3G), the fourth generation (4G), the fifth generation (5G) and the sixth generation (6G) and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

It is to be understood that the numbers of devices and their connection relationships and types shown in FIG. 1C are only for the purpose of illustration without suggesting any limitation. For example, the environment 100 may include any suitable numbers of devices adapted for implementing embodiments of the present disclosure. For example, there may be more than one network device connected to the terminal device 120, e.g., for carrier aggregation (CA) or E-UTRA and NR dual connectivity (EN-DC). For example, while FIG. 1C depicts the terminal device 120 as a mobile phone, the terminal device 120 may be any type of user equipment.

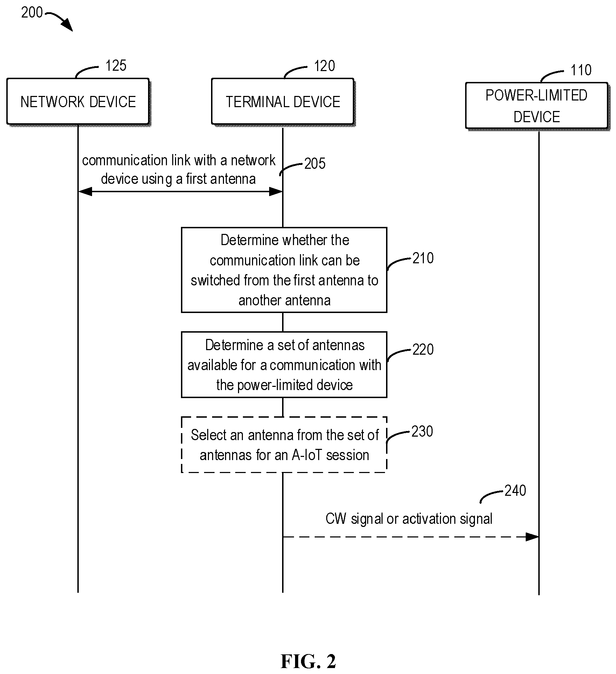

FIG. 2 illustrates an example of a process flow 200 in accordance with some example embodiments of the present disclosure. For the purpose of discussion, the process flow 200 will be described with reference to FIG. 1C. The process flow 200 involves a network device 125, a terminal device 120, and a power-limited device 110. It would be appreciated that although the process flow 200 has been described in the network environment 100 of FIG. 1C, this process flow may be likewise applied to other communication scenarios.

A communication link between the terminal device 120 and the network device 125 is established at 205. The terminal device 120 may use at least a first antenna for the communication link with the network device 125. For example, the terminal device 120 may transmit an RRC uplink transmission to the network device 125, and/or receive an RRC downlink transmission from the network device 125, using the first antenna.

For example, the first antenna may be used by the terminal device 120 for an uplink transmission, there is a given power level for a PA that connected to the first antenna, and given power is delivered to the first antenna.

The terminal device 120 has multiple antennas, where one or more antennas (including the first antenna) used for the communication link with the network device 125 may be called as one or more primary antennas, and one or more antennas that not used for communication link with the network device 125 may be called as one or more secondary antennas. For example, in a scenario of uplink multi-input multi-output (UL MIMO), uplink carrier aggregation (UL-CA), or E-UTRA and NR dual connectivity (EN-DC), there may be more than one primary antenna that is used for the communication link with more than one network device (such as the network device 125, and another network device which is not illustrated). For example, the one or more primary antennas at least include a first antenna, and the one or more secondary antennas at least includes a second antenna, for ease of description below.

At 210, the terminal device 120 determines whether the communication link with the network device 125 is capable of switching from the first antenna to a different antenna. In some examples, the terminal device 120 may determine whether a communication quality will be degraded if the communication link is switched from the first antenna to a secondary antenna (e.g., a second antenna); and further determine that the communication link is capable of switching from the first antenna to a different antenna without the quality degradation.

For example, the communication quality which is evaluated may be a quality of an uplink connection and/or a quality of a downlink connection. In some instances, since the uplink connection is more likely to be degraded with a suboptimal selected antenna (than a downlink connection), the quality of the uplink connection may be considered as a metric.

In some embodiments, the terminal device 120 may determine a power imbalance between the first antenna and each of the one or more secondary antennas. In some examples, the terminal device 120 may determine a downlink power imbalance between the first antenna and each of the one or more secondary antennas, e.g., based on a measurement on at least one of: a channel state information reference signal (CSI-RS), a demodulation reference signal (DMRS), or a synchronization signal block (SSB) from the network device. For instance, the terminal device 120 has been calibrated in downlink from the antennas to baseband, which may be performed based on UE implementation.

In some embodiments, the terminal device 120 may determine an estimated power headroom (E-PH) for each of the one or more secondary antennas. In some examples, the terminal device 120 may determine an E-PH for the second antenna. For example, given power delivered to the first antenna and power delivered to the second antenna may be determined and used. For example, a currently power level for a PA connected to the first antenna and a difference in Front-End Loss from a PA connected to the second antenna may be used for determining the E-PH associated with the second antenna. For instance, the terminal device 120 has calibrated in uplink from the PAs to antenna, which may be performed based on UE implementation.

In some embodiments, the terminal device 120 may compare the power imbalance and the E-PH discussed above, to determine whether the communication link is capable of switching from the first antenna to the second antenna. For example, if the E-PH is less than the power imbalance, the terminal device 120 may determine that the communication link is not capable of switching from the first antenna to the second antenna. For example, if the E-PH is not less than the power imbalance, the terminal device 120 may determine that the communication link is capable of switching from the first antenna to the second antenna.

In some examples, the determination may be made for each of the one or more secondary antennas, to determine whether the communication link with the network device can be switched from the first antenna to any of the one or more secondary antennas.

In this way, the terminal device 120 may determine whether a communication link with the network device (i.e. an RRC connection currently on the first antenna) can momentarily be switched to any of the one or more secondary antennas, while maintaining the uplink quality to the network device. For instance, if any of the one or more secondary antennas with E-PH of the connected PA is higher than the downlink power imbalance to the first antenna, it is determined that the RRC connection currently on the first antenna can momentarily be switched to any of the one or more secondary antennas, while maintaining the uplink quality to the network device.

At 220, the terminal device 120 determines a set of antennas available for a communication with a power-limited device 110 (e.g., for an A-IoT session of the power-limited device 110), e.g., based on a determination result at step 210. In some examples, the set of antennas available for an A-IoT session is also called as a pool of potential/candidate antennas for the A-IoT session, a set of potential/candidate antennas for the A-IoT session, etc.

In some embodiments, the set of antennas available for an A-IoT session includes the one or more secondary antennas. Alternatively, the set of antennas available for an A-IoT session may or may not include the first antenna, depending on the determination result at step 210.

In some examples, if the communication link with the network device is capable of switching from the first antenna to a different antenna (e.g., any of the one or more secondary antennas), the set of antennas available for an A-IoT session may include the one or more secondary antennas and the first antenna. In some other examples, if the communication link with the network device is not capable of switching from the first antenna to a different antenna (e.g., any of the one or more secondary antennas), the set of antennas available for an A-IoT session may include the one or more secondary antennas, without including the first antenna.

Accordingly, a solution is provided in the present disclosure to enable a terminal device to determine whether an antenna allocated for an RRC connection can also be included in a pool of penitential antennas for an A-IoT session without a risk of degrading the quality of the RRC connection.

In addition or alternatively, the terminal device 120 may select, from the set of antennas available for an A-IoT session, an antenna for the A-IoT session at 230. In some implementations, the selected antenna may be determined based on a round-robin procedure with a SCU.

In some embodiments, the terminal device 120 may transmit, to the SCU 130, information about the set of antennas available for a communication with a power-limited device 110, and then select one antenna from the set of antennas available for the communication with a power-limited device 110 based on a round-robin procedure with the SCU 130. For example, the terminal device 120 can inform the SCU 130 of how many antennas it has available for an A-IoT session, whereafter the SCU 130 can allocate resource for a round-robin sequence of those antennas to determine the best antenna for the A-IoT session.

In addition, the terminal device 120 may perform a communication with the power-limited device 110 using the selected antenna. As illustrated, the terminal device 120 may transmit a CW signal or an activation signal to the power-limited device 110 at 240. For example, the CW signal may be in an uplink spectrum and the CW signal may be used for energy harvesting at the power-limited device 110.

In some embodiments, the selected antenna for the communication with the power-limited device 110 (e.g., for the A-IoT session) may be the first antenna that used for the RRC connection, in this case, the RRC connection may be switched from the first antenna to a different antenna (e.g., a secondary antenna such as a second antenna).

It is to be noted that if a primary antenna (e.g. the first antenna) is selected for the A-IoT session, the power consumption for the RRC connection may increase, as a higher absolute PA power level is required for a secondary antenna maintaining the RRC connection quality. However, a success rate for a transmission for the A-IoT session is increased, since a best antenna for the A-IoT session is selected and used. Therefore, the overall power at the terminal device 120 can be reduced.

Since a best antenna can be selected and used for the A-IoT session, allocated resources for the A-IoT session can be reduced and a latency requirement of the A-IoT session can be satisfied.

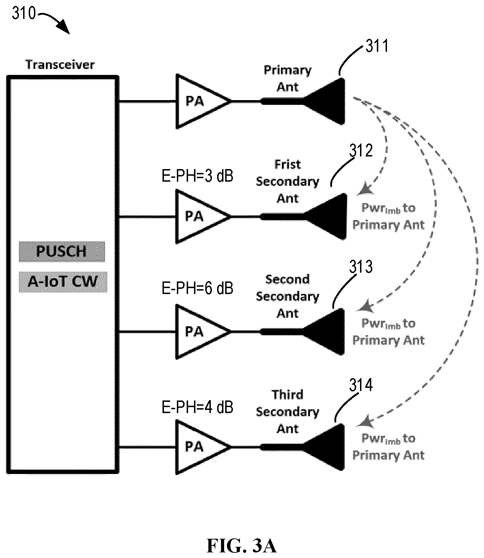

FIG. 3A illustrates an example of antenna determination 310 at the terminal device in accordance with some example embodiments of the present disclosure. The terminal device with 4 antennas 311-314 is illustrates, where each of the antennas 311-314 are connected to a PA. Although different antennas connect to different PAs in FIG. 3A, the present disclosure does not limit for this aspect. The illustrated PAs can be implemented as a same PA or multiple PAs, depending on the implementation of the terminal device and/or the frequency allocation of the RRC connection and the A-IoT session, same or different frequencies. Some implementations will enable the terminal device to switch any PA to any antenna. In addition, each antenna may be also connected to a receiver chain, which is not shown in the figure.

The primary antenna 311 is used for an RRC connection with a network device. For each of the secondary antennas 312-314, the terminal device may determine a corresponding E-PH, and may determine a power imbalance with the primary antenna 311.

As illustrated, for the first secondary antenna 312, the E-PH is 3 dB, and a power imbalance between the primary antenna 311 and the first secondary antenna 312 is Pwr_{lmb}. As illustrated, for the second secondary antenna 313, the E-PH is 6 dB, and a power imbalance between the primary antenna 311 and the second secondary antenna 313 is Pwr_{lmb}. As illustrated, for the third secondary antenna 314, the E-PH is 4 dB, and a power imbalance between the primary antenna 311 and the third secondary antenna 314 is Pwr_{lmb}.

In an example of Pwr_{lmb} =2 dB, each of the E-PHs for the secondary antennas 312-314 is higher than Pwr_{lmb}, then the set of antennas available for an A-IoT session may include the antennas 311-314. That is, the primary antenna 311 which is used for communication with a network device can be taken as a candidate antenna for A-IoT session. In this case, if the primary antenna 311 is selected for an A-IoT session, the RRC connection can be switched to any of the secondary antennas 312-314.

In another example of Pwr_{lmb} =5 dB, the E-PH for the secondary antenna 313 is higher than Pwr_{lmb}, then the set of antennas available for an A-IoT session may include the antennas 311-314. That is, the primary antenna 311 which is used for communication with a network device can be taken as a candidate antenna for A-IoT session. In this case, if the primary antenna 311 is selected for an A-IoT session, the RRC connection can be switched to the secondary antenna 313.

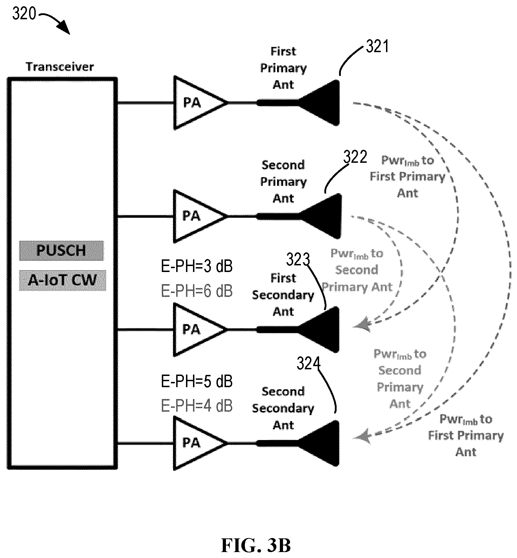

FIG. 3B illustrates another example of antenna determination 320 at the terminal device in accordance with some example embodiments of the present disclosure. The terminal device with 4 antennas 321-324 is illustrated, where each of the antennas 321-324 are connected to a PA. Although different antennas connect to different PAs in FIG. 3B, the present disclosure does not limit for this aspect. The illustrated PAs can be implemented as a same PA or multiple PAs, depending on the implementation of the terminal device and/or the frequency allocation of the RRC connection and the A-IoT session, same or different frequencies. In addition, each antenna may be also connected to a receiver chain, which is not shown in the figure.

The first primary antenna 321 and the second primary antenna 322 are used for an RRC connection with a network device. For each of the first primary antenna 321 and the second primary antenna 322, the terminal device may determine whether it can be included in a set of antennas available for an A-IoT session.

For the first primary antenna 321, the terminal device may determine an E-PH for the first secondary antenna 323 is 3 dB and a power imbalance between the first primary antenna 321 and the first secondary antenna 323 is Pwr_{lmb}; the terminal device may determine an E-PH for the second secondary antenna 324 is 5 dB and a power imbalance between the first primary antenna 321 and the second secondary antenna 324 is Pwr_{lmb}. In an example of Pwr_{lmb} =2 dB, each of the E-PHs for the secondary antennas 323-324 is higher than Pwr_{lmb}, then the set of antennas available for an A-IoT session may include the first primary antenna 321. In another example of Pwr_{lmb} =4 dB, the E-PH for the secondary antenna 324 is higher than Pwr_{lmb}, then the set of antennas available for an A-IoT session may include the first primary antenna 321. However, in another example of Pwr_{lmb} =6 dB, none of the E-PHs for the secondary antennas 323-324 is higher than Pwr_{lmb}, then the set of antennas available for an A-IoT session may not include the first primary antenna 321.

For the second primary antenna 322, the terminal device may determine an E-PH for the first secondary antenna 323 is 6 dB and a power imbalance between the second primary antenna 322 and the first secondary antenna 323 is Pwr_{lmb}; the terminal device may determine an E-PH for the second secondary antenna 324 is 4 dB and a power imbalance between the second primary antenna 322 and the second secondary antenna 324 is Pwr_{lmb}. In an example of Pwr_{lmb} =2 dB, each of the E-PHs for the secondary antennas 323-324 is higher than Pwr_{lmb}, then the set of antennas available for an A-IoT session may include the second primary antenna 322. In another example of Pwr_{lmb} =5 dB, the E-PH for the secondary antenna 323 is higher than Pwr_{lmb}, then the set of antennas available for an A-IoT session may include the second primary antenna 322. However, in another example of Pwr_{lmb} =7 dB, none of the E-PHs for the secondary antennas 323-324 is higher than Pwr_{lmb}, then the set of antennas available for an A-IoT session may not include the second primary antenna 322.

Accordingly, in the example as illustrated in FIG. 3B, the set of antennas available for an A-IoT session may include the antennas 321-324. That is, the primary antennas 321-322 which are used for communication with a network device can be taken as a candidate antenna for A-IoT session.

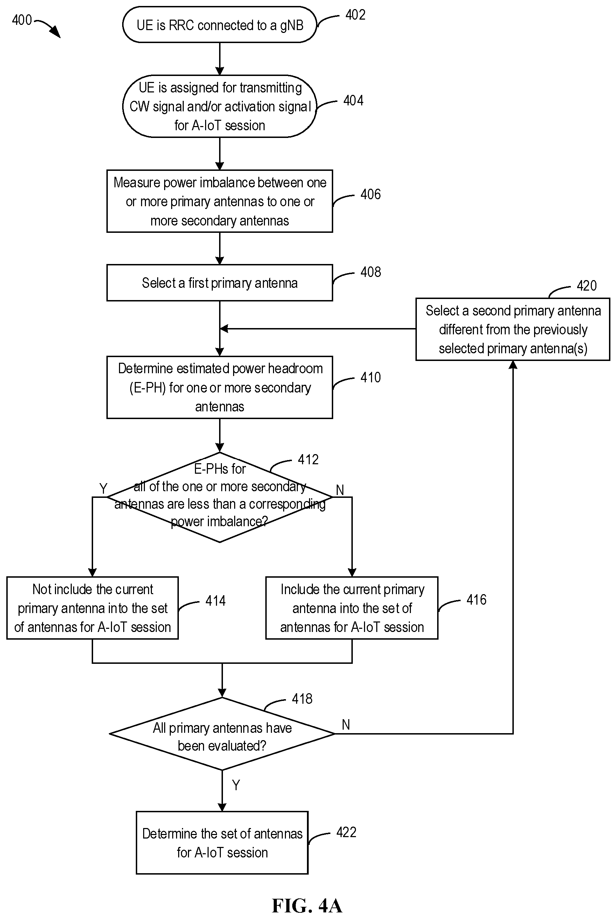

FIG. 4A illustrates an example of a process flow 400 at the terminal device in accordance with some example embodiments of the present disclosure. A UE may be RRC connected to a network device such as a gNB at 402, and may further be assigned for transmitting a CW signal and/or an activation signal for an A-IoT session at 404. For example, one or more primary antennas are used for the RRC connection with the gNB. At 406, the UE measures a power imbalance between the one or more primary antennas to one or more secondary antennas.

The UE may select a first current primary antenna at 408, and further determine whether the first current primary antenna can be included in the set of antennas for A-IoT session by steps 410-416.

At 410, the UE determines an E-PH for each of the one or more secondary antennas, with reference to a selected primary antenna. The UE further determines whether the E-PHs for all of the one or more secondary antennas are less than a corresponding power imbalance (e.g., a power imbalance between the currently selected primary antenna and the one or more secondary antennas) at 412. In case the determination result is yes at 412, the currently selected primary antenna will not be included in the set of antennas for A-IoT session at 414, since there is a risk of a quality degradation of the RRC connection. In case the determination result is no at 412, the currently selected primary antenna will be included in the set of antennas for A-IoT session at 416, as the quality degradation of the RRC connection will not occur.

After the determination process 410-416 for the first current primary antenna, the UE may determine whether all primary antennas have been evaluated at 418.

If there is at least one primary antenna is not evaluated, the UE select, at 420, a second primary antenna that is not evaluated, where the second primary antenna is different from previously selected primary antenna(s) such as the first primary antenna. In addition, the determination process 410-416 for the newly selected primary antenna (e.g., the second primary antenna) may be performed, to determine whether the second primary antenna can be included in the set of antennas for A-IoT session.

If all of the one or more primary antennas have been evaluated, the UE determines the set of antennas for A-IoT session at 422.

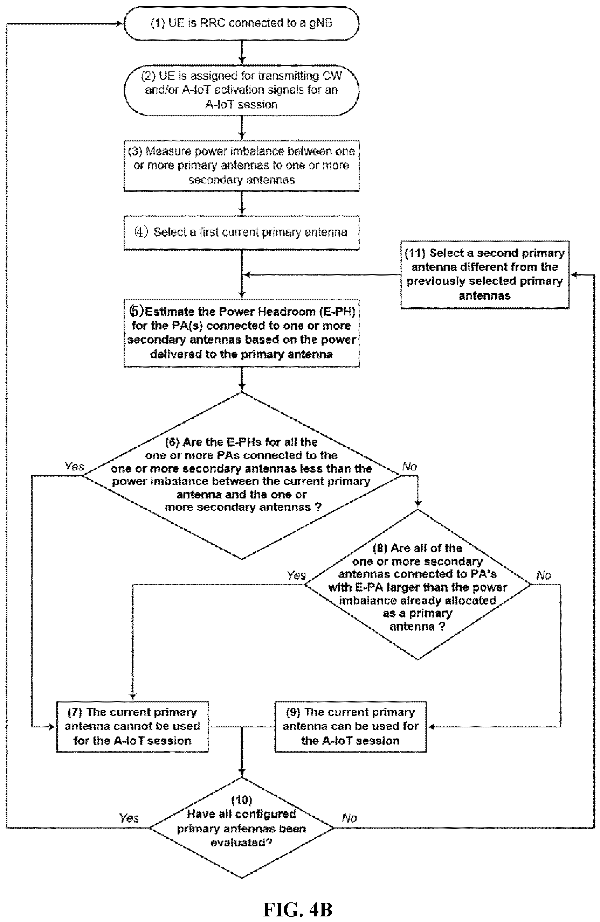

FIG. 4B illustrates another example of a process flow at the terminal device in accordance with some example embodiments of the present disclosure. The process flow in FIG. 4B includes steps 1-11, where steps 1-7 may refer to steps 402-414 in FIG. 4A respectively, steps 9-11 may refer to steps 416-420 in FIG. 4A respectively. As illustrated, the process flow in FIG. 4B may further include step 8.

In case the determination result is NO at step 6, it is further determined whether all of the one or more secondary antennas with E-PHs larger than the power imbalance are already allocated as a primary antenna at step 8. For example, the UE may be in a CA or EN-DC mode. In addition, step 7 is performed if the determination result is YES at step 8, or, step 9 is performed if the determination result is NO at step 8.

It should be noted that the process flow in FIG. 4A or 4B is only one illustrative example without any limitation in the present disclosure, some other examples are also applied and the present disclosure does not limit for this aspect.

It is to be understood that the embodiments described with reference to FIGS. 2-4B are only for the purpose of illustration without any limitation, some other embodiments may still be within the scope of the present disclosure. In some examples, there may be more primary antennas used for the RRC connection. In some examples, a best antenna selected for the A-IoT session (e.g., at step 230) may be a secondary antenna that is not used for the RRC connection.

According to example embodiments with reference to FIGS. 2-4B, a set of antennas available for A-IoT session may be determined. Since a best antenna for the A-IoT session may be occupied by the RRC connection, an evaluation for the antenna used by the RRC connection is performed to determine whether there is a risk of quality degradation for the RRC connection, if an antenna used for the RRC connection is changed to another antenna. In this case, qualities for both the RRC communication and the A-IoT session are considered, therefore, an overall power reduction at the terminal device and a reduction of allocated resources for the A-IoT session can be guaranteed.

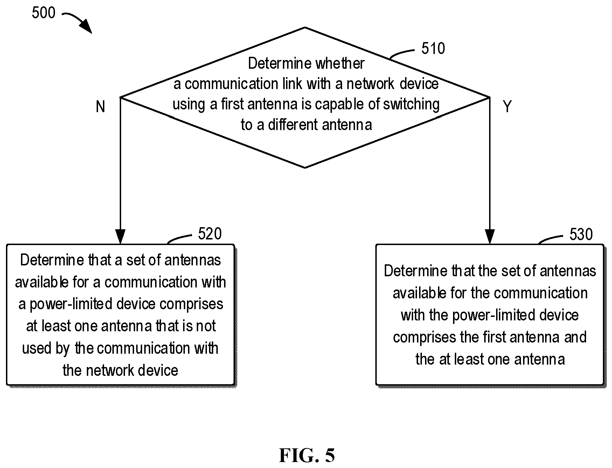

FIG. 5 illustrates a flowchart 500 of a method implemented at a terminal device in accordance with some example embodiments of the present disclosure. For the purpose of discussion, the method 500 will be described from the perspective of the terminal device 120 with reference to FIG. 1C. The terminal device 120 is equipped with a plurality of antennas, and at least the first antenna in the plurality of antennas is used for a communication with a network device.

At block 510, the terminal device 120 determines whether a communication link with a network device using a first antenna is capable of switching to a different antenna. At block 520, the terminal device 120 determines that a set of antennas available for a communication with a power-limited device comprises at least one antenna that is not used by the communication with the network device based on determining that the communication link is not capable of switching from the first antenna to a different antenna. At block 530, the terminal device 120 determines that the set of antennas available for the communication with the power-limited device comprises the first antenna and the at least one antenna based on determining that the communication link is capable of switching from the first antenna to a different antenna.

In some example embodiments, the terminal device 120 determines an estimated power headroom for the at least one antenna; the terminal device 120 determines a power imbalance between the first antenna and the at least one antenna; and the terminal device 120 compares the estimated power headroom and the power imbalance, to determine whether the communication link is capable of switching from the first antenna to the at least one antenna.

In some example embodiments, based on determining that the estimated power headroom is less than the power imbalance, the terminal device 120 determines that the communication link is not capable of switching from the first antenna to the at least one antenna.

In some example embodiments, based on determining that the estimated power headroom is not less than the power imbalance, the terminal device 120 determines that the communication link is capable of switching from the first antenna to the at least one antenna.

In some example embodiments, the estimated power headroom for the at least one antenna is determined with reference to power delivered to the first antenna.

In some example embodiments, the power imbalance is determined based on a measurement on at least one of: a CSI-RS, a DMRS, or an SSB from the network device.

In some example embodiments, the terminal device has been calibrated in downlink and/or uplink among the plurality of antennas.

In some example embodiments, the terminal device 120 transmits, to a session control unit (SCU) of the power-limited device, information about the set of antennas available for the communication with the power-limited device; the terminal device 120 selects one antenna from the set of antennas available for the communication with the power-limited device based on a round-robin procedure with the session control unit; and the terminal device 120 performs the communication with the power-limited device using the selected antenna.

In some example embodiments, based on determining that the selected antenna is the first antenna, the terminal device 120 switches the communication link with the network device to one of the at least one antenna.

In some example embodiments, the communication with the power-limited device comprises at least one of: a transmission of a carrier wave for energy harvesting at the power-limited device; or a transmission of an activation signal to the power-limited device.

In some example embodiments, the power-limited device comprises an A-IoT device.

In some example embodiments, an apparatus (for example, the terminal device 120) comprises at least one processor; and at least one memory storing instructions that, when executed by the at least one processor, cause the apparatus at least to: determine whether a communication link with a network device using a first antenna is capable of switching to a different antenna; and based on determining that the communication link is not capable of switching from the first antenna to a different antenna, determine that a set of antennas available for a communication with a power-limited device comprises at least one antenna that is not used by the communication with the network device; or based on determining that the communication link is capable of switching from the first antenna to a different antenna, determine that the set of antennas available for the communication with the power-limited device comprises the first antenna and the at least one antenna, wherein the terminal device is equipped with a plurality of antennas, and at least the first antenna in the plurality of antennas is used for the communication with the network device.

In some example embodiments, an apparatus capable of performing the method 500 (for example, the terminal device 120) may comprise means for performing the respective steps of the method 500. The means may be implemented in any suitable form. For example, the means may be implemented in a circuitry or software module.

In some example embodiments, the apparatus comprises: means for determining whether a communication link with a network device using a first antenna is capable of switching to a different antenna; and means for based on determining that the communication link is not capable of switching from the first antenna to a different antenna, determining that a set of antennas available for a communication with a power-limited device comprises at least one antenna that is not used by the communication with the network device; or means for based on determining that the communication link is capable of switching from the first antenna to a different antenna, determining that the set of antennas available for the communication with the power-limited device comprises the first antenna and the at least one antenna, wherein the apparatus is equipped with a plurality of antennas, and at least the first antenna in the plurality of antennas is used for the communication with the network device.

In some example embodiments, the apparatus comprises: means for determining an estimated power headroom for the at least one antenna; means for determining a power imbalance between the first antenna and the at least one antenna; and means for comparing the estimated power headroom and the power imbalance, to determine whether the communication link is capable of switching from the first antenna to the at least one antenna.

In some example embodiments, the apparatus comprises: means for, based on determining that the estimated power headroom is less than the power imbalance, determining that the communication link is not capable of switching from the first antenna to the at least one antenna.

In some example embodiments, the apparatus comprises: means for, based on determining that the estimated power headroom is not less than the power imbalance, determining that the communication link is capable of switching from the first antenna to the at least one antenna.

In some example embodiments, the apparatus comprises: means for transmitting, to the SCU of the power-limited device, information about the set of antennas available for the communication with the power-limited device; means for selecting one antenna from the set of antennas available for the communication with the power-limited device based on a round-robin procedure with the session control unit; and means for performing the communication with the power-limited device using the selected antenna.

In some example embodiments, the apparatus comprises: means for, based on determining that the selected antenna is the first antenna, switching the communication link with the network device to one of the at least one antenna.

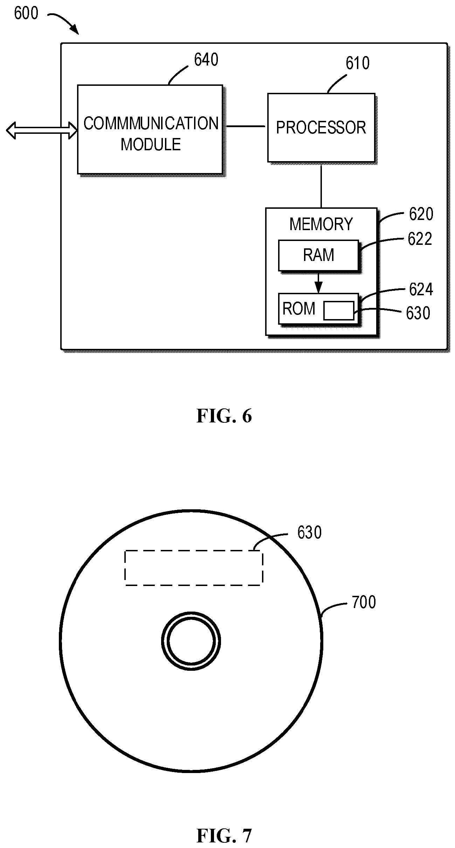

FIG. 6 illustrates a simplified block diagram of a device 600 that is suitable for implementing some example embodiments of the present disclosure. The device 600 may be provided to implement the communication device, for example the terminal device 120 as shown in FIG. 1C. As shown, the device 600 includes one or more processors 610, one or more memories 620 coupled to the processor 610, and one or more communication modules 640 coupled to the processor 610.

The communication module 640 is for bidirectional communications. The communication module 640 has at least one antenna to facilitate communication. The communication interface may represent any interface that is necessary for communication with other network elements.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a Read Only Memory (ROM) 624, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The program 630 may be stored in the ROM 624. The processor 610 may perform any suitable actions and processing by loading the program 630 into the RAM 622.

The embodiments of the present disclosure may be implemented by means of the program 630 so that the device 600 may perform any process of the disclosure as discussed with reference to FIGS. 2-5. The embodiments of the present disclosure may also be implemented by hardware or by a combination of software and hardware.

In some example embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. The computer readable medium may include any types of tangible non-volatile storage, such as ROM, EPROM, a flash memory, a hard disk, CD, DVD, and the like.

FIG. 7 illustrates a block diagram of an example of a computer readable medium 700 in accordance with some example embodiments of the present disclosure. The computer readable medium 700 has the program 630 stored thereon. It is noted that although the computer readable medium 700 is depicted in form of CD or DVD in FIG. 7, the computer readable medium 700 may be in any other form suitable for carry or hold the program 630.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to any of FIGS. 2-5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device (120) comprising:
at least one processor (610); and
at least one memory (620) storing instructions that, when executed by the at least one processor, cause the terminal device at least to:
determine (510) whether a communication link with a network device (125) using a first antenna is capable of switching to a different antenna; and
based on determining that the communication link is not capable of switching from the first antenna to a different antenna, determine (520) that a set of antennas available for a communication with a power-limited device comprises at least one antenna that is not used by the communication with the network device; or
based on determining that the communication link is capable of switching from the first antenna to a different antenna, determine (530) that the set of antennas available for the communication with the power-limited device comprises the first antenna and the at least one antenna,
wherein the terminal device is equipped with a plurality of antennas (311, 312, 313, 314; 321, 322, 323, 324), and at least the first antenna (311; 321) in the plurality of antennas is used for the communication with the network device.

2. The terminal device of claim 1, wherein the at least one processor is configured to cause the terminal device to:
determine an estimated power headroom for the at least one antenna;
determine a power imbalance between the first antenna and the at least one antenna; and
compare the estimated power headroom and the power imbalance, to determine whether the communication link is capable of switching from the first antenna to the at least one antenna.

3. The terminal device of claim 2, wherein the at least one processor is configured to cause the terminal device to:
based on determining that the estimated power headroom is less than the power imbalance, determine that the communication link is not capable of switching from the first antenna to the at least one antenna; or
based on determining that the estimated power headroom is not less than the power imbalance, determine that the communication link is capable of switching from the first antenna to the at least one antenna.

4. The terminal device of claim 2 or 3, wherein the estimated power headroom for the at least one antenna is determined with reference to power delivered to the first antenna.

5. The terminal device of any of claims 2-4, wherein the power imbalance is determined based on a measurement on at least one of: a channel state information reference signal (CSI-RS), a demodulation reference signal (DMRS), or a synchronization signal block (SSB) from the network device.

6. The terminal device of any of claims 1-5, wherein the terminal device has been calibrated in downlink and/or uplink among the plurality of antennas.

7. The terminal device of any of claims 1-6, wherein the at least one processor is configured to cause the terminal device to:
transmit, to a session control unit (SCU) of the power-limited device, information about the set of antennas available for the communication with the power-limited device;
select one antenna from the set of antennas available for the communication with the power-limited device based on a round-robin procedure with the session control unit; and
perform the communication with the power-limited device using the selected antenna.

8. The terminal device of claim 7, wherein the at least one processor is configured to cause the terminal device to:
based on determining that the selected antenna is the first antenna, switch the communication link with the network device to one of the at least one antenna.

9. The terminal device of any of claims 1-8, wherein the communication with the power-limited device comprises at least one of:
a transmission of a carrier wave for energy harvesting at the power-limited device; or
a transmission of an activation signal to the power-limited device.

10. The terminal device of any of claims 1-9, wherein the power-limited device comprises an ambient internet of things (A-IoT) device.

11. A method comprising:
determining, at a terminal device, whether a communication link with a network device using a first antenna is capable of switching to a different antenna; and
based on determining that the communication link is not capable of switching from the first antenna to a different antenna, determining that a set of antennas available for a communication with a power-limited device comprises at least one antenna that is not used by the communication with the network device; or
based on determining that the communication link is capable of switching from the first antenna to a different antenna, determining that the set of antennas available for the communication with the power-limited device comprises the first antenna and the at least one antenna,
wherein the terminal device is equipped with a plurality of antennas, and at least the first antenna in the plurality of antennas is used for the communication with the network device.

12. A non-transitory computer readable medium (700) comprising program instructions that, when executed by an apparatus, cause the apparatus to perform at least the method of claim 11.
